# EUROPÄISCHE PATENTSCHRIFT

(11) **EP 2 283 088 B1**
(45) Veröffentlichungstag und Bekanntmachung des Hinweises auf die Patenterteilung: **16.07.2014**
(21) Anmeldenummer: 09745556.2
(22) Anmeldetag: 13.05.2009
(51) Int. Cl.: C09D 5/44

(54) **ELEKTROTAUCHLACKZUSAMMENSETZUNG**
ELECTRODEPOSITION PAINT COMPOSITION
COMPOSITION DE PEINTURE PAR ÉLECTROPHORÈSE À IMMERSION

(30) Priorität: 14.05.2008 DE 102008023444
(43) Veröffentlichungstag der Anmeldung: 16.02.2011
(73) Patentinhaber: BASF Coatings GmbH, 48165 Münster (DE)
(72) Erfinder: BAUMGART, Hubert, 48163 Münster (DE); SCHULTE, Rolf, 48329 Havixbeck (DE); OTT, Günther, 48167 Münster (DE); KREIS, Winfried, 48163 Münster (DE); DANNER, Thomas, 69469 Weinheim (DE); SACHWEH, Bernd, 67249 Meckenheim (DE); JUDAT, Sonja, 67067 Ludwigshafen (DE)
(74) Vertreter: Leifert & Steffan
(86) Internationale Anmeldenummer: PCT/EP2009/003404
(87) Internationale Veröffentlichungsnummer: WO 2009/138222

(56) Entgegenhaltungen:
- EP-A- 0 595 341
- JP-A- 6 200 192
- US-A- 5 178 736
- US-A- 5 203 975
- US-A- 5 338 434
- US-A1- 2007 023 288
- US-A1- 2007 051 634

## Beschreibung

Die Erfindung betrifft eine kathodisch abscheidbare Elektrotauchlackzusammensetzung enthaltend eine wässrige Bindemitteldispersion, einen Vernetzer und einen an einen feinteiligen Träger gebundenen Katalysator. Die Erfindung betrifft auch die Verwendung kathodisch abscheidbarer Elektrotauchlackzusammensetzungen zur Lackierung von leitfähigen Werkstücken, wobei die leitfähigen Werkstücke Automobilkarossen oder Teile davon sein können.

Die kathodische Elektrotauchlackierung (KTL) ist ein Verfahren, bei dem wasserverdünnbare Lacke durch Anlegen eines Gleichstroms auf elektrisch leitende Werkstücke aufgebracht werden. Das Werkstück wird in ein Lackbad getaucht und der ionisierte Lack lagert sich auf dem Werkstück ab. Das Werkstück wird dann dem Bad entnommen und der Lack in einem weiteren Schritt eingebrannt. Als bevorzugte Werkstücke sind hier Automobilkarossen oder Teile davon zu nennen.

Den wasserverdünnbaren Lacksystemen werden Vernetzungskatalysatoren wie beispielsweise Dibutylzinnoxid beigefügt. Es konnte beobachtet werden, dass es beim Einsatz dieser Katalysatoren zu Kratervorfällen kommt, bei denen Dibutylzinnverbindungen als Metaboliten des Dibutylzinnoxids ursächlich oder mitursächlich beteiligt sind. Durch diese Krater wird die Qualität des Lacks beeinträchtigt und es ist häufig eine Nachbearbeitung notwendig. So muss in der Automobil-Lackierlinie der Lack beispielsweise geschliffen werden, wodurch es zu zusätzlichen Kosten kommt. Durch die Krater wirkt der Lack zudem qualitativ weniger hochwertig und das Ansehen hinsichtlich der Qualität im Markt leidet. Zudem konnten beim Einsatz von Dibutylzinnoxid und Dioctylzinnoxid Ausfällungen im Tauchbecken beobachtet werden. Im schlimmsten Falle können diese Ausfällungen zum Verlust des gesamten Tauchlacks im KTL-Becken führen.

Aufgrund von Phosphatverschleppung aus der Vorbehandlung kann es im KTL-Tauchbecken zu erhöhten Phosphatgehalten kommen. Wird die Vernetzungsreaktion der Tauchlackierung durch Zinnverbindungen wie zum Beispiel Dibutylzinnoxid katalysiert, kann es leicht zur Bildung von Zinnphosphatsalzen kommen, die als Niederschlag zur Bildung von leichten Dellen bis hin zu deutlichen Kratern (kreisförmige Benetzungsstörung bis zum Substrat) führen können. Außerdem sinkt der Gehalt an Katalysator im Tauchbad, da sich das Dibutylzinnoxid aufgrund seiner Instabilität allmählich auflösen und durch die besagte Niederschlagsbildung dem Badmaterial entzogen werden kann. Dadurch kann es zu mangelnder Vernetzung und Abnahme der Korrosionsresistenz kommen.

Dibutylzinnoxid und Dioctylzinnoxid haben zudem den Nachteil, dass sie feste Verbindungen sind, weshalb aufgrund der Unlöslichkeit im organischen Filmmaterial größere Mengen eingesetzt werden müssen und diese Katalysatoren weniger wirtschaftlich sind. Da es sich um einen Feststoff handelt, können zudem auch durch eine mangelhafte Dispergierung Fehlstellen und Krater auftreten.

Aus dem Stand der Technik sind eine Reihe von Vernetzungskatalysatoren, auch Härtungskatalysatoren genannt, bekannt, die in Elektrotauchlackzusammensetzungen eingesetzt werden können, die aber nicht den hohen Anforderungen eines Härtungskatalysators in Tauchlacken genügen. So offenbart zum Beispiel die europäische Offenlegungsschrift EP 0 264 834 A1 katalytisch aktive Metallverbindungen auf organischen polymeren Trägern als Zusätze für eine Elektrotauchlackzusammensetzung. Die EP 0 859 017 A1 beschreibt wasser-unverträgliche Katalysatoren, die auf einen in Wasser dispergierbaren anorganischen Träger aufgebracht werden, um besagte Katalysatoren auch in wässrigen Systemen verwenden zu können. Die US-Offenlegungsschrift US 2007/0045116 A1 offenbart eine Elektrotauchlackzusammensetzung mit einer Harzphase und katalytisch aktiven Nanopartikeln, die in einem wässrigen Medium dispergiert sind. Die Harzphase enthält dabei ein Härtungsmittel und ein Aktiv-Wasserstoff-enthaltendes Harz. Die deutsche Patentanmeldung DE 100 41 038 A1 offenbart für die Katalyse geeignete mit SnO₂ beschichtete SiO₂-Partikel.

All diese Beispiele offenbaren keine einheitliche Verteilung der Katalysatoren oder der Katalysatoren enthaltenden Partikel in ihren entsprechenden Dispersionen und/oder Tauchlackzusammensetzungen. Zudem werden in den US-Anmeldungen US 2007/0149655 A1, WO 2007/025297 A3, US 2007/0045116 A1 und US 2007/0051634 A1 Vollkatalysatoren vorgestellt. Das heißt, prinzipiell katalytisches Material wird auch für den Partikelkern verwendet, obwohl nur die äußeren Schichten katalytisch aktiv sind.

Demnach ist es Aufgabe der vorliegenden Erfindung, Elektrotauchlackzusammensetzungen zur Verfügung zu stellen, die trägergebundene Härtungskatalysatoren mit homogener Verteilung enthalten.

Die Aufgabe wird durch die technische Lehre der unabhängigen Patentansprüche gelöst. Vorteilhafte Weiterbildungen finden sich in den abhängigen Ansprüchen, der Beschreibung, den Beispielen und der Figur.

Überraschenderweise wurde gefunden, dass eine kathodisch abscheidbare Elektrotauchlackzusammensetzung enthaltend eine wässrige Bindemitteldispersion, einen Vernetzer und Kern/Schale-Partikel KS, dadurch gekennzeichnet, dass die Kern/Schale-Partikel aus einem Kern K und einem die Schale S bildenden Katalysator bestehen und dass der Kern ein anorganischer und katalytisch inerter Träger ist und die Kern/Schale-Partikel einen maximalen Durchmesser von 1000 nm besitzen und die Dicke der Schale S maximal 10 nm misst und die Kern/Schale-Partikel dadurch herstellbar sind, dass von einer Suspoemulsion einer ersten, dispersen flüssigen Phase I, in einer zweiten, kontinuierlichen flüssigen Phase II ausgegangen wird, die in der ersten, dispersen flüssigen Phase I submikrone Partikel eines den Kern bildenden Feststoffes K sowie eine molekular dispers gelöste Vorläufersubstanz VS für die Schale und gegebenenfalls einen Reaktanden R enthält, und dass in der ersten, dispersen flüssigen Phase I der Suspoemulsion die submikronen Kern/Schale-Partikel KS durch chemische oder physikalische Umwandlung der Vorläufersubstanz VS für die Schale hergestellt werden, die bekannten Probleme aus dem Stand der Technik zu lösen vermag.

Die Härtungskatalysatoren enthaltenen Dispersionen bilden wässrige und stabile Dispersionen und sind besonders als Komponente für kathodisch abscheidbare Tauchlacke geeignet. Eine für einen Tauchlack zuvor hergestellte wässrige, stabile Dispersion von erfindungsgemäßen Kern/Schale-Partikeln kann auf Grund der homogenen Verteilung der Teilchen und der hervorragenden rheologischen Eigenschaften der Dispersion gut verarbeitet und gelagert werden. Zudem kann gegenüber den aus dem Stand der Technik bekannten Vollkatalysatoren Material eingespart werden, da als erfindungsgemäßer Träger bevorzugt das kostengünstige SiO₂ verwendet wird. Die in dieser Anmeldung vorgestellten Tauchlackzusammensetzungen, enthaltend Katalysator-tragende Partikel mit einem Kern/Schale-Aufbau können somit kostengünstiger massenproduziert werden, verglichen mit Katalysatoren gemäß dem Stand der Technik. Da für die erfindungsgemäßen Teilchen ein anorganischer und katalytisch inerter Träger verwendet wird, auf dem die katalytischen Metalloxide vorzugsweise dispers und separiert voneinander immobilisiert werden, steht eine extrem hohe spezifische Oberfläche des Katalysators zur Verfügung. Dieser Vorteil entfällt bei Vollkatalysatoren gemäß dem Stand der Technik. Somit kann die hierin beschriebene Elektrotauchlackzusammensetzung enthaltend Katalysator-tragende Partikel eine höhere katalytische Wirkung bei geringerem Materialaufwand entfalten. Zudem wird durch die Immobilisierung des Katalysatormaterials auf dem Kern eine Verringerung des Diffusionskoeffizienten erreicht, was ein Übertreten des Katalysators aus der kathodischen Tauchlackschicht in darüber aufgebrachte Lackschichten reduziert oder ganz verhindert.

Die in dieser Anmeldung vorgestellten erfindungsgemäßen Elektrotauchlackzusammensetzungen enthaltend Kern/Schale-Partikel als Härtungskatalysatoren für die Vernetzungsreaktionen in Lacken lösen somit die aus dem Stand der Technik bekannten Probleme trägergebundener Katalysatoren.

Die Kern/Schale-Partikel der erfindungsgemäßen Elektrotauchlackzusammensetzungen werden nach einem Suspoemulsionsverfahren, das im Folgenden beschrieben werden soll, hergestellt.

Als Suspensionen werden in bekannter Weise Gemische bezeichnet, die in einer kontinuierlichen flüssigen Phase eine disperse Feststoffphase enthalten.

Als Emulsionen werden flüssigdisperse Systeme bezeichnet, die aus zwei nicht miteinander mischbaren flüssigen Phasen bestehen, wovon die eine Phase, die als disperse oder innere Phase bezeichnet wird, in der zweiten, als kontinuierliche oder homogene Phase bezeichneten Phase, in Form feiner Tröpfchen dispergiert vorliegt.

Je nach Polarität der Phasen werden Emulsionen als Öl-in-Wasser- (O/W-) bzw. Wasser-in-Öl- (W/O-) Emulsionen bezeichnet, wobei im ersten Fall eine Ölphase, bestehend aus unpolaren Medien, in einer polaren Phase, bestehend aus einer wässrigen Lösung oder anderen, mit der unpolaren Phase nicht mischbaren Verbindungen, in Form fein dispergierter Tropfen vorliegt. Im Fall der W/O-Emulsion liegt umgekehrt die polare Phase in Form fein dispergierter Tropfen in der Ölphase vor. Der Anteil der dispersen Phase an der gesamten Emulsion kann in einem Bereich von > 0 % bis < 100% liegen.

Der Begriff "Miniemulsion" wird für durch sterische und/oder elektrostatische Effekte und/oder durch ein oder mehrere Tenside und/oder durch weitere Hilfsstoffe stabilisierte, thermodynamisch instabile flüssigdisperse Systeme (Emulsionen) verwendet, deren disperse Phase einen mittleren Tröpfchendurchmesser ≤ 5000 nm (≤ 5 µm) aufweist.

Der Begriff Suspoemulsion wird für Mischungen verwendet, die in einer Emulsion verteilte Feststoffpartikel aufweisen und entsprechend wird unter einer Minisuspoemulsion eine Miniemulsion mit darin verteilten Feststoffpartikeln verstanden.

Die Herstellung einer Miniemulsion kann beispielsweise unter Zuführung von mechanischer Energie, beispielsweise in Form von Rührenergie, turbulenter kinetischer Energie, Ultraschallwellen, Druck mit nachfolgender Entspannung über ein Homogenisierventil, mittels statischer Mischer, Mikromischer oder Membranen bzw. allgemein durch Aufprägen von laminaren oder turbulenten Scher- und/oder Dehnströmungen und Kavitation erfolgen. Die entstehende Emulsionsart (W/O-Emulsion oder O/W-Emulsion) wird durch die Auswahl des Stoffsystems und der Konzentration der dispersen und kontinuierlichen Phasen, des oder der Tenside und/oder der verwendeten Hilfsstoffe bestimmt.

Voraussetzung für die Emulgierung ist, dass die Tropfen in der Miniemulsion oder in der Suspoemulsion für die Dauer der Herstellung von Kern/Schale-Partikeln ausreichend stabil sind. Dies kann je nach Stoffsystem durch Oberflächenladung, also elektrostatische Abstoßung, der Tropfen an sich gegeben sein. Ist eine fremde Stabilisierung der Tropfenphase durch Tenside nötig, so kann diese über elektrostatische und/oder sterische Effekte, die durch geeignete Stabilisierungshilfsmittel hervorgerufen werden, oder Pickering-Stabilisatoren (grenzflächenaktive Partikel) erfolgen, die in der flüssigen, kontinuierlichen Phase enthalten sind. Auch in der flüssigen, dispersen Phase können Hilfsmittel zur Stabilisierung der Partikel und/oder der Emulsion enthalten sein. Hilfsmittel zur Stabilisierung der Miniemulsion oder der submikronen Suspension schließen auch Substanzen ein, die die rheologischen Eigenschaften der kontinuierlichen Phase derartig verändern, dass Aufrahmen oder Sedimentation der Tropfen oder der Partikel der dispersen Phase verhindert oder verlangsamt werden.

Als flüssig werden vorliegend Phasen verstanden, die unter den Bedingungen der vorliegend beschriebenen Verfahren im flüssigen Aggregatzustand sind.

Unter dem Begriff submikrone Partikel eines den Kern bildenden Feststoffes K werden auch submikrone Partikel eines oder mehrerer den Kern bildenden Feststoffe K verstanden. Analog werden unter einer molekular dispers gelösten Vorläufersubstanz VS für die Schale auch mehrere molekular dispers gelöste Vorläufersubstanzen VS für die Schale, und unter einer molekular dispers gelösten Vorläufersubstanz VK für den Kern auch mehrere molekular dispers gelöste Vorläufersubstanzen VK für den Kern verstanden.

Es wurde gefunden, dass es möglich ist, in den Tropfen einer ersten flüssigen Phase I, die sowohl den einen oder die mehreren den Kern bildenden Feststoffe als auch die eine oder die mehreren molekular dispers gelösten Vorläufersubstanzen des die Schale bildenden Feststoffes enthalten, aus den molekular dispers gelösten Vorläufersubstanzen auf den Feststoffkernen die Schale auszubilden. Dabei fungieren die Tropfen der ersten flüssigen Phase I aufgrund ihrer geringen Abmessungen - es handelt sich um eine Minisuspoemulsion -, und entsprechend, wie eingangs definiert, um mittlere Tröpfchendurchmesser der dispersen Phase ≤ 5 µm, als Minireaktoren, die gewährleisten, dass die gegebene Polydispersität der submikronen Ausgangs-Suspension der den Kern bildenden Feststoffe im Wesentlichen beibehalten wird.

Hierzu wird von einer Suspoemulsion einer ersten, dispersen flüssigen Phase I, in einer zweiten, kontinuierlichen flüssigen Phase II ausgegangen, die in der ersten, dispersen flüssigen Phase I submikrone Partikel eines den Kern bildenden Feststoffes K sowie eine molekular dispers gelöste Vorläufersubstanz VS für die Schale enthält.

In einer Ausführungsform enthält die obige Suspoemulsion zusätzlich einen Reaktanden R.

Die oben beschriebene Suspoemulsion kann in einer ersten Ausführungsform hergestellt werden, indem
- von einer Suspension der submikronen Partikel des den Kern bildenden Feststoffes K in der ersten flüssigen Phase I ausgegangen,
- hierzu die Vorläufersubstanz VS für die Schale zugegeben und molekular dispers gelöst und anschließend
- die zweite flüssige Phase II zugegeben und unter Zuführung von Energie mit der ersten flüssigen Phase I emulgiert wird.

In einer weiteren Ausführungsform wird die obige Suspoemulsion hergestellt, indem
- von einer Suspoemulsion von submikronen Partikeln eines den Kern bildenden Feststoffes K in der ersten flüssigen Phase I als disperser Phase, in der zweiten flüssigen Phase II als kontinuierlicher Phase ausgegangen wird,
- die Vorläufersubstanz VS für die Schale in einer dritten flüssigen Phase III eingebracht wird, die mit der ersten flüssigen Phase I mischbar ist, jedoch mit der zweiten flüssigen Phase II nicht mischbar ist, und
- aus der dritten flüssigen Phase III, enthaltend die Vorläufersubstanz VS, mit einer vierten flüssigen Phase IV, die mit der zweiten flüssigen Phase II mischbar ist, nicht jedoch mit der ersten und der dritten flüssigen Phase III, unter Energieeintrag eine Emulsion gebildet wird, und
- die Tropfen der ersten flüssigen Phase I und die Tropfen der dritten flüssigen Phase III durch Energieeintrag zur Koaleszenz gebracht werden.

In dieser Ausführungsform wird somit die disperse Phase einer ersten Suspoemulsion, enthaltend in den Tropfen der dispersen Phase die submikronen Partikel des den Kern bildenden Feststoffes, mit der dispersen Phase einer zweiten Emulsion, enthaltend in den Tropfen der dispersen Phase die Vorläufersubstanz VS für die Schale, zur erzwungenen Koaleszenz gebracht.

In einer weiteren Ausführungsform wird die obige Suspoemulsion zur Verfügung gestellt, die in den Tropfen der dispersen Phase zusätzlich zu den submikronen Partikeln des den Kern bildenden Feststoffes K und der molekular dispers gelösten Vorläufersubstanz VS für die Schale einen Reaktanden R enthält. Hierzu wird
- von einer Suspoemulsion von submikronen Partikeln eines den Kern bildenden Feststoffes K sowie einer molekular dispers gelösten Vorläufersubstanz VS für die Schale in der ersten flüssigen Phase I als disperser Phase, in der zweiten flüssigen Phase II als kontinuierlicher Phase ausgegangen,
- wonach ein Reaktand R entweder in der zweiten, kontinuierlichen flüssigen Phase II zugegeben wird und in die Tropfen der ersten, dispersen flüssigen Phase I eindiffundiert oder
- in einer weiteren flüssigen Phase V zugegeben wird, die mit der ersten, dispersen flüssigen Phase I mischbar ist, jedoch nicht mit der zweiten, kontinuierlichen flüssigen Phase II
- aus der weiteren flüssigen Phase V, enthaltend den Reaktanden R mit einer zusätzlichen flüssigen Phase VI, unter Energieeintrag eine Emulsion gebildet wird und die Tropfen derselben, bestehend aus Phase V
- mit den Tropfen der ersten, dispersen flüssigen Phase I, enthaltend den den Kern bildenden Feststoff K sowie die Vorläufersubstanz VS für die Schale, zur erzwungenen Koaleszenz gebracht werden.

In einer weiteren Ausführungsform wird die obige Suspoemulsion, enthaltend zusätzlich zu den submikronen Partikeln des den Kern bildenden Feststoffes K und der molekular dispers gelösten Vorläufersubstanz VS für die Schale den Reaktanden R durch erzwungene Koaleszenz der Tropfen einer Suspoemulsion, enthaltend die submikronen Partikel des Feststoffes K und den Reaktanden R, mit den Tropfen einer weiteren Emulsion, enthaltend in den Tropfen der dispersen Phase die Vorläufersubstanz VS für die Schale, hergestellt.

Die Herstellung der Suspoemulsion, enthaltend die submikronen Partikel des den Kern bildenden Feststoffes K in der ersten, dispersen flüssigen Phase I, mit der zweiten flüssigen Phase II als kontinuierlicher Phase, kann analog zu den oben beschriebenen Herstellungsverfahren für die Suspoemulsion, enthaltend in den Tropfen der dispersen Phase die submikronen den Kern bildenden Feststoffpartikel K, die molekular dispers gelöste Vorläufersubstanz VS für die Schale und ggf. den Reaktanden R, hergestellt werden. In einer ersten Ausführungsform wird hierzu
- von einer Miniemulsion ausgegangen, enthaltend eine Vorläufersubstanz VK für den den Kern bildenden Feststoff in der ersten, dispersen flüssigen Phase I, wobei die zweite flüssige Phase II die kontinuierliche Phase ist, und woraus durch physikalische oder chemische Umwandlung der Vorläufersubstanz VK des den Kern bildenden Feststoffes die Minisuspoemulsion des den Kern bildenden Feststoffes K in der ersten, dispersen flüssigen Phase I, mit der zweiten flüssigen Phase II als kontinuierlicher Phase, gebildet wird.

In einer weiteren Ausführungsform wird hierzu
- von einer Miniemulsion ausgegangen, enthaltend eine Vorläufersubstanz VK für den den Kern bildenden Feststoff in der ersten, dispersen flüssigen Phase I, wobei die zweite flüssige Phase II die kontinuierliche Phase ist,
- wonach ein Reaktand R entweder der zweiten, kontinuierlichen flüssigen Phase II zugesetzt wird und in die Tropfen der ersten flüssigen Phase I eindiffundiert oder
- in eine dritte flüssige Phase III zugesetzt wird, die mit der ersten flüssigen Phase I mischbar ist, jedoch mit der zweiten flüssigen Phase II nicht mischbar ist, und
- aus der dritten flüssigen Phase III, enthaltend den Reaktanden R mit einer vierten flüssigen Phase IV, die mit der zweiten flüssigen Phase II mischbar ist, nicht jedoch mit der ersten und der dritten flüssigen Phase, unter Energieeintrag eine Emulsion gebildet und deren Tropfen der dispersen, flüssigen Phase III mit den Tropfen der ersten, dispersen flüssigen Phase I, enthaltend die Vorläufersubstanz VK für den den Kern bildenden Feststoff zur erzwungenen Koaleszenz gebracht wird, und wonach
- die Vorläufersubstanz VK für den den Kern bildenden Feststoff K mit dem Reaktanden R zur chemischen Umsetzung gebracht wird.

In der Ausführungsform, in der die submikronen Kern/Schale-Partikel aus der Suspoemulsion, enthaltend in den Tropfen der dispersen Phase die submikronen Partikel des den Kern bildenden Feststoffes K sowie die molekular dispers gelöste Vorläufersubstanz VS für die Schale durch physikalische Umwandlung der Vorläufersubstanz VS für die Schale hergestellt werden, kann die physikalische Umwandlung insbesondere die Veränderung eines oder mehrerer Verfahrensparameter, bevorzugt der Temperatur und/oder des Druckes oder auch die Zugabe eines Lösungsmittels oder eines Salzes analog der zuvor beschriebenen Zugabe eines Reaktanden R sein. Die physikalische Umwandlung kann insbesondere durch Kühlung oder durch Verdampfung des Lösungsmittels des oder der gelösten Feststoffe der Schale bzw. des Kerns oder durch Zugabe eines weiteren Lösungsmittels analog der zuvor beschriebenen Zugabe eines Reaktanden R, das die Löslichkeit des oder der gelösten Feststoffe der Schale bzw. des Kerns herabsetzt, oder durch Zugabe eines oder mehrerer weiterer Salze analog der zuvor beschriebenen Zugabe eines Reaktanden R, die die Löslichkeit des oder der gelösten Feststoffe der Schale bzw. des Kerns herabsetzen, stattfinden.

Als submikrone Partikel werden bekannterweise Feststoffpartikel bezeichnet, deren mittlere Außendurchmesser unterhalb von einem Mikrometer liegen.

Der mittlere Außendurchmesser des Kerns der Nanopartikel liegt bevorzugt bei ≥ 10 nm und ≤ 900 nm, weiter bevorzugt bei ≥ 10 nm und ≤ 500 nm, und insbesondere bevorzugt bei ≥ 10 nm und ≤ 250 nm.

Die Dicke der Schale der submikronen Kern/Schale-Partikel liegt bevorzugt in einem Bereich von ≥ 0,5 nm und ≤ 50 nm, weiter bevorzugt bei ≥ 1 nm und ≤ 8 nm, und insbesondere bevorzugt ≥ 1 nm und ≤ 5 nm.

Die Dicke der Schale kann folgendermaßen berechnet werden: 0,5(Durchmesser Kern/Schale-Partikel - Durchmesser Kern). Der Durchmesser des Kerns und der Durchmesser der Kern/Schale-Partikel kann z. B. durch eine Messung mittels Transmissionselektronenmikroskopie (TEM) bestimmt werden.

Da es sich bei den in dieser Anmeldung vorgestellten Partikel um submikrone Kern/Schale-Partikel handelt, überschreitet die Summe der Durchmesser von Kern und Schale nie 1000 nm. Die Summe der Durchmesser von Kern und Schale kann maximal 1000 nm betragen.

Als Schale werden diskrete Partikel auf den Kern-Partikeln bezeichnet. Diese Partikel können beispielsweise die Funktion eines Katalysators aufweisen. Nachdem die Katalysator-Partikel auf den Träger aufgebracht wurden, sind diese als diskrete Teilchen aneinander angrenzend oder beabstandet auf der Trägeroberfläche angeordnet.

Die submikronen Kern-Partikel, diskreten Schalenpartikel und Kern/Schale-Partikel haben idealerweise eine sphärische Struktur. Es sind aber auch Abweichungen von dieser Idealstruktur möglich. Diese Abweichungen können zum Beispiel in Form von kleinen Erhebungen oder Vertiefungen an der Oberfläche der Kern/Schale-Partikel auftreten. Jedoch besitzen die submikronen Kern-Partikel, diskreten Schalenpartikel und die Kern/Schale-Partikel eine im Wesentlichen ideal sphärische dreidimensionale Geometrie.

Die Partikelgröße kann anhand elektronenmikroskopischer Aufnahmen bestimmt werden.

Der erfindungsgemäße Tauchlack enthält den oder die den Kern bildenden Feststoffe K bevorzugt in einem Anteil von 0,01 bis 40 Gew.-%, insbesondere in einem Anteil von 1 bis 10 Gew.-%, bezogen auf das Gesamtgewicht des Tauchlacks.

Der den Kern bildende Feststoff K (Träger) ist insbesondere eine Substanz oder eine Mischung von Substanzen ausgewählt aus der Gruppe bestehend aus SiO₂, TiO₂, Al₂O₃, ZrO₂, Fe₂O₃, Fe₃O₄. Bevorzugt sind hierbei SiO₂ und TiO₂.

Einige der oben aufgeführten anorganischen Oxide kommen in verschiedenen Modifikationen vor. So kommt TiO₂ in den Modifikationen Rutil, Anatas und Brookit vor, die Alumuniumoxid-Modifikationen umfassen kubisches γ-Al₂O₃ oder rhomboedrisches α-Al₂O₃.

Die hierin verwendeten Trägermaterialien unterliegen keiner Einschränkung in der Wahl der Modifikationen.

Wie schon erwähnt, ist SiO₂ ein bevorzugtes Trägermaterial. Bei Verwendung von SiO₂ als Trägermaterial für die Kern/Schale-Partikel wird gefällte Kieselsäure bevorzugt. Bei der Verwendung von pyrogener Kieselsäure für Dispersionen entstehen Agglomerate. Werden diese Materialien als Träger für Katalysatoren verwendet und werden die resultierenden Kern/Schale-Partikel für z. B. eine wässrige Dispersion verwendet, ergibt sich eine inhomogene Größenverteilung der Kern/Schale-Partikel in der Dispersion. Die durch die Agglomerat-Überstrukturen hervorgerufenen Inhomogenitäten verursachen oftmals unerwünschte rheologische Nebenwirkungen in Dispersionen und auch in Elektrotauchlacken. Daher werden die Standardkatalysatoren üblicherweise mit einem Reibharz angerieben, wodurch die Agglomeratstruktur zum Teil aufgebrochen wird. Auf Grund der homogenen Verteilung der hier vorgestellten Kern/Schale-Partikel-Dispersionen können diese Desagglomerationsschritte entfallen bevor die Kern/Schale-Partikel in die Tauchlackzusammensetzung gegeben werden. Die Dispersionen können ohne weitere Verarbeitung in die Tauchlackzusammensetzung gegeben werden. Es können somit sehr stabile Dispersionen erzeugt werden, das heißt, dass die erfindungsgemäßen Teilchen sich überhaupt nicht oder nur sehr wenig in den Tauchlackzusammensetzung absetzen.

Der Katalysator (Schale S) kann ausgewählt werden aus der Gruppe bestehend aus ZnO, SnO, SnO₂, Bi₂O₃, Ce₂O₃, CeO₂, CuO, Cu₂O, WO₃, Y₂O₃, La₂O₃, MnO₂, MoO₂, Nd₂O₃, NdO₂, VO₂, VO₃, V₂O₅ oder Mischungen davon. Bevorzugt sind hierbei SnO und SnO₂.

Einige der oben als Katalysatormaterialien vorgestellten Oxide kommen in verschiedenen Modifikationen vor. Die hierin verwendeten Katalysatormaterialien unterliegen keiner Einschränkung in der Wahl der Modifikationen.

Wie schon erwähnt, kann zusätzlich noch ein Reaktand R verwendet werden. Beim Reaktanden kann es sich beispielsweise um eine lösliche organische Base, insbesondere um ein Amin, oder um eine wasserlösliche Base, wie eine wässrige Natriumhydroxid- oder Kaliumhydroxid-Lösung, oder auch ein Gas wie Kohlendioxid oder Ammoniak, ein Reduktionsmittel (H₂, NaBH₄), ein Oxidationsmittel, Initiatoren, um eine Pufferlösung oder um Ionenaustauscherharze handeln.

Von den beiden nicht miteinander mischbaren Flüssigkeiten ist eine hydrophil und die andere hydrophob.

Bevorzugt ist die erste, disperse flüssige Phase I wässrig und die zweite, kontinuierliche flüssige Phase II eine organische Phase, insbesondere ein Alkan oder eine Mischung von Alkanen, ein pflanzliches Öl oder eine Mischung von pflanzlichen Ölen, ein Silikonöl oder eine Mischung von Silikonölen oder eine Mischung der aufgeführten Substanzen.

In einer Ausführungsvariante kann aus der Minisuspoemulsion der submikronen Kern/Schale-Partikel durch Abziehen der ersten, dispersen flüssigen Phase I oder der zweiten, kontinuierlichen flüssigen Phase II eine Suspension von submikronen Kern/Schale-Partikeln in der jeweils anderen flüssigen Phase erhalten werden.

Vorteilhaft können auf die den Kern bildenden Partikel zwei bis zehn, bevorzugt zwei bis drei, Schalen übereinander aufgebracht werden. Besonders bevorzugt ist jedoch das Aufbringen von nur einer Katalysatorschicht.

In einer vorteilhaften Ausführungsform kann der Kern und die eine oder die mehreren Schalen jeweils eine gleiche chemische Zusammensetzung, jedoch eine unterschiedliche Modifikation, insbesondere eine unterschiedliche Kristallstruktur aufweisen, oder es kann das Material des Kerns amorph und das Material der einen oder der mehreren Schalen kristallin sein, oder umgekehrt.

In einer weiteren Ausführungsform wird eine Minisuspoemulsion von submikronen Kern/Schale-Partikeln hergestellt, bei denen die Schale den Kern nicht vollständig umschließt, wonach die submikronen Kern/Schale-Partikel einem nachgeschalteten Verfahrensschritt unterworfen werden, in dem der Kern vollständig oder teilweise, insbesondere durch Verdampfen, Lösen oder Ätzen, unter Erhalt einer Hohlstruktur entfernt wird und nachfolgend auf dieselbe bevorzugt eine weitere Schale oder mehrere weitere Schalen aufgebracht werden können.

Wie schon erwähnt, haben die so aus Kern und Schale gebildeten Partikel idealerweise eine sphärische Struktur. Bei einem Mehrfach-Schalenaufbau sind aber auch von dieser idealen Struktur leicht abweichende Strukturen möglich.

Die Teilchen können zu einer Dispersion verarbeitet werden und besagte Dispersion kann als Komponente für die erfindungsgemäße Elektrotauchlackzusammensetzung verwendet werden. Der Metallgehalt des Katalysators der Kern/Schale-Partikel in der Elektrotauchlackzusammensetzung liegt dabei zwischen 2,5 - 10 mmol Metall bezogen auf 100 g Bindemittelfestkörper.

Die nach dem oben beschriebenen Verfahren hergestellten submikronen Kern/Schale-Partikel können zur Katalyse von Vernetzungsreaktionen in Elektrotauchlacken, bevorzugt in kathodisch abscheidbaren Elektrotauchlackzusammensetzung verwendet werden.

Die Erfindung wird nachfolgend durch eine Figur und Ausführungsbeispiele näher beschrieben.

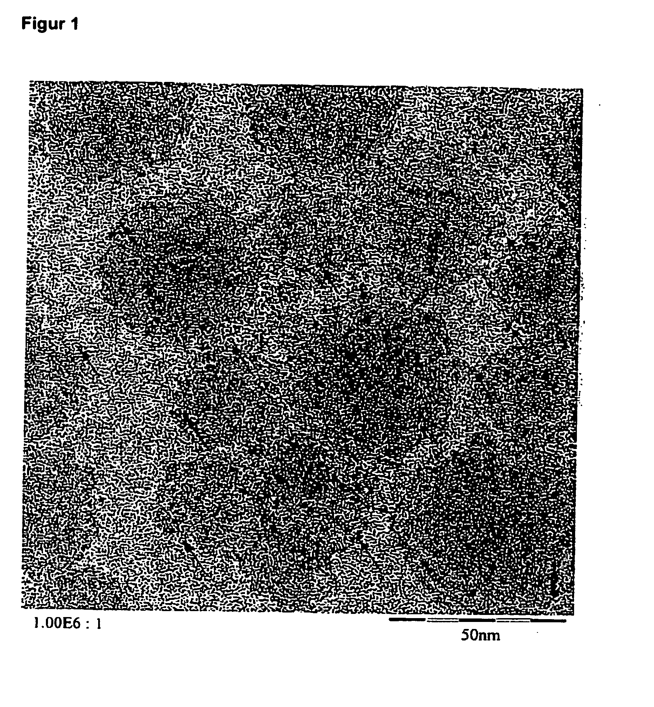

- **Figur 1:**: Elektronenmikroskopische Aufnahme (TEM) von mit SnO₂ beladenen SiO₂-Partikeln. Die SiO₂-Trägerteilchen haben einen Durchmesser von 20-130 nm und sind mit 2-4 nm (Durchmesser) großen SnO₂-Partikeln belegt. In Figur 1 sind die SnO₂-Erhebungen auf den SiO₂-Partikeln als dunkle Bereiche sichtbar. Die SnO₂-Katalysator-Partikel sind als diskrete Teilchen aneinander angrenzend oder beabstandet auf der Oberfläche angeordnet.

### Beispiele

### Beispiel 1

### Herstellung von Kern/Schale-Partikeln

Die Kern/Schale-Partikel wurden nach dem oben beschriebenen Miniemulsionsverfahren mit einem molaren Verhältnis Si : Sn von 10 : 1 hergestellt.

Als Ausgangsmaterial für die Herstellung der Miniemulsion wurde eine 45%ige (Massen%) wässrige Suspension der Firma H.C. Starck (Levasil 100/45%) von SiO₂ verwendet. Diese Suspension wurde mit 29,77 Massen% VE-Wasser (bezogen auf die Emulsion) auf eine Endkonzentration von 2,5% Massen% SiO₂ bezogen auf den SiO₂-Festanteil (in der Emulsion), verdünnt. Anschließend wurde SnCl₄ x 5 H₂O (1,07 Massen% bezogen auf die Emulsion) in der wässrigen Suspension gelöst. In einem parallelen Ansatz wurde 1,50 Massen% (bezogen auf die Emulsion) Span 80 (Sorbitan-Monoölsäureester) der Firma Roth (Karlsruhe Deutschland) in 65,17 Massen% (bezogen auf die Emulsion) n-Dekan gelöst. Die beiden flüssigen Phasen wurden anschließend vereinigt und mit einem Rotor-Stator-Rührer der Firma Ultra-Turrax voremulgiert. Dabei bildeten sich SiO₂-Partikel und gelöstes SnCl₄ enthaltende wässrige Tropfen in einer kontinuierlichen, gelöstes Span 80 enthaltenden n-Dekan-Lösung.

Die so erhaltene Rohemulsion wurde anschließend mit einem Hochdruckhomogenisator (Differenzdruck = 1000 bar) nachemulgiert, wodurch sich Tropfen von ≤ 1 µm bildeten.

Diese Emulsion wurde anschließend mit Triethylamin (Das molare Verhältnis von Triethylamin und Sn betrug dabei 6:1) in einem gerührten Druckbehälter eingefüllt und auf 130°C aufgeheizt. Diese Temperatur wurde für 4 Stunden gehalten. Auf diese Weise bildeten sich 2-4 nm große SnO₂-Katalysator-Partikel als diskrete Teilchen, die teils aneinander angrenzend und teils beabstandet auf der SiO₂-Oberfläche angeordnet waren (siehe auch Fig. 1).

Durch mehrfache Zentrifugation, Abtrennen des Überstandes und Wiederauffüllen mit Flüssigkeit wurden die entstandenen Partikel gewaschen. Die so erhaltenen Partikel wurden in VE-Wasser redispergiert. Der Gesamtfeststoffgehalt der Partikel betrug 12 Massen%, wobei 20 % der Feststoffgesamtmasse auf SnO₂ und 80% auf SiO₂ entfielen.

### Beispiel 2

### Herstellung eines Vernetzers für eine Elektrotauchlackzusammensetzung

Gemäß EP 0 961 797 B1 stellt man einen Vernetzer her:
In einem Reaktor, der mit einem Rührer, Rückflusskühler, Innenthermometer und Inertgaseinleitung ausgestattet war, wurden 1084 g Isomere und höherfunktionelle Oligomere auf Basis von 4,4'-Diphenylmethandüsocyanat mit einem NCO-Äquivalentgewicht von 135 (Basonat® A270, Fa. BASF; NCO-Funktionalität ca. 2,7; Gehalt an 2,2'- und 2,4'-Diphenylmethandiisocyanat unter 5%) unter Stickstoffatmosphäre vorgelegt. Man gab 2 g Dibutylzinndilaurat zu und tropft 1314 g Butyldiglycol mit einer solchen Geschwindigkeit zu, dass die Produkttemperatur unter 70°C blieb. Nach Ende der Zugabe wurde die Temperatur weitere 120 min bei 70°C gehalten. Bei der nachfolgenden Kontrolle waren keine NCO-Gruppen mehr nachweisbar. Man kühlte auf 65°C ab. Der Feststoffgehalt lag bei > 97% (1 h bei 130°C).

### Beispiel 3

### Herstellung der lösungsmittelarmen wässrigen Bindemitteldispersion, die ein kathodisch abscheidbares Kunstharz und einen Vernetzer enthält

Gemäß EP 0 961 797 B1 wird eine Bindemitteldispersion hergestellt:
In einem wärmeträgerölbeheizten Laborreaktor, ausgestattet mit Rührer, Rückflusskühler, Thermometer und Inertgaseinleitungsrohr, wurden 1128 Teile eines handelsüblichen Epoxidharzes auf Basis Bisphenol A mit einem Epoxidäquivalentgewicht (EEW) von 188, 262 Teile Dodecylphenol, 31,4 Teile Xylol und 228 Teile Bisphenol A vorgelegt und unter Stickstoff auf 127°C aufgeheizt. Unter Rühren wurden 1,6 g Triphenylphosphin zugegeben, worauf eine exotherme Reaktion eintrat und die Temperatur auf 160°C stieg. Man ließ wieder auf 130°C abkühlen und kontrollierte anschließend den Epoxidgehalt. Das EEW von 532 zeigte an, dass > 98% der phenolischen OH-Gruppen reagiert haben. Sodann wurden 297,5 Teile Pluriol P 900 (Polypropylenglykol MW 900, BASF) unter gleichzeitiger Kühlung zugegeben. 5 Minuten später gab man bei 120°C unter weiterer Kühlung 105 Teile Diethanolamin zu. Sobald nach kurzzeitiger Exothermie (Tmax 127°C) die Temperatur auf 110°C gesunken war (30 Min.), gab man 51 Teile N,N-Dimethylaminopropylamin zu. Nach kurzzeitiger Exothermie (Tmax 140°C) ließ den Ansatz für 2 Stunden bei 130°C weiterreagieren, bis die Viskosität konstant blieb (1,8 dPas, Platte-Kegel-Viskosimeter bei 23°C, 40%-ig in Solvenon PM (BASF)). Sodann gab man unter gleichzeitiger Kühlung 58,5 Teile Butylglykol und 887,8 Teile des Vernetzers (Beispiel 5.1) zu und trug bei 105°C aus.

2100 Teile der noch heißen Mischung wurden unverzüglich in einer vorgelegten Mischung aus 1945 Teilen vollentsalztem Wasser (VE-Wasser) und 33,1 Teilen Eisessig unter intensivem Rühren dispergiert. Nach kurzem Homogenisieren wurde mit weiteren 1404 Teilen VE-Wasser verdünnt und über Plattenfilter K900 (Fa. Seitz) filtriert. Die Dispersion hatte folgende Kennzahlen:

| | |
|---|---|
| Festkörper (1 Std. bei 130°C): | 35,7% |
| MEQ-Base | 0,657 meq/g Festharz |
| MEQ-Säure | 0,283 meq/g Festharz |
| pH | 5,4 |
| Mittlere Teilchengröße | 125 nm (Lichtstreumethode) |
| Absetzstabilität | nach 3 Mon. Lagerzeit bei Raumtemperatur kein Bodensatz |
| Viskosität | 14 sec. (DIN4 Becher bei 23°C) |

### Beispiel 4

### Kationisches, wasserlösliches Reibharz

Gemäß EP 505 445 B1, Beispiel 1.3, stellt man ein Reibharz her, das der besseren Handhabung wegen zusätzlich mit 2,82 Teilen Eisessig und 13,84 Teilen VE- Wasser neutralisiert und verdünnt wird. Der ursprüngliche Festgehalt wird dadurch auf 60% abgesenkt.

### Beispiel 5

### Wässrige Pigmentpasten

Gemäß dem in EP 505 445 B1 beschriebenen Verfahren werden aus den in der untenstehenden Tabelle (Tab.1) aufgeführten Ausgangsstoffen (Gew.-%) wässrige Pigmentpasten hergestellt.

**Tab.1: Vergleichs- und erfindungsgemäße Pigmentpasten**

| | Paste 1 Vergleich | Paste 2 |
|---|---|---|
| Reibharz gemäß Beispiel 4 | 40 | 40 |
| vollentsalztes Wasser | 7 | 7 |
| Dibutylzinnoxid | 3 | |
| Russ | 0,5 | 0,5 |
| Wismutsubsalicylat | 3 | |
| Aluminiumsilikat | 8 | 8 |
| Titandioxid | 36 | 36 |

### Beispiel 6

### Zubereitung der Elektrotauchbäder und Abscheidung der Lackfilme

Zur Prüfung als kathodisch abscheidbare Elektrotauchlacke werden die in Beispiel 3 beschriebene wässrige Bindemitteldispersion und die in Tab.1 aufgeführten Pigmentpasten zu den in der Tabelle 2 angegebenen Tauchlackbädern kombiniert. Als Vergleich wird Tauchbad 1 bereitet. Die erfindungsgemäßen Kern/Schale-Partikel enthaltende Dispersion aus Beispiel 1 und die Paste 2 aus Tabelle 1 wird in die Tauchbäder 2-4 gegeben. Man verfährt dabei so, dass die Bindemitteldispersion vorgelegt und mit entionisiertem Wasser verdünnt wird. Anschließend werden unter Rühren die Pigmentpaste und die erfindungsgemäße Kern/Schale-Partikel enthaltende Dispersion aus Beispiel 1 eingetragen. Die angegebenen Werte entsprechen Gewichtsanteilen (g).

**Tab.2: Vergleichs- und erfindungsgemäße Elektrotauchbäder**

| | Tauchbad 1 Vergleich | Tauchbad 2 | Tauchbad 3 | Tauchbad 4 |
|---|---|---|---|---|
| Vollentsalztes Wasser | 2434 | 2434 | 2434 | 2434 |
| Bindemitteldispersion aus Beispiel 3 | 2315 | 2315 | 2315 | 2315 |
| Paste 1 (Vergleich) | 289 | | | |
| Paste 2 | | 289 | 289 | 289 |
| Kern/Schale-Partikel enthaltende Dispersion aus Beispiel 1 | | 207 | 414 | 621 |

Man lässt die Elektrotauchlackbäder 3 Tage bei Raumtemperatur unter Rühren altern. Die Abscheidung der Lackfilme erfolgt während 2 Minuten bei 220 Volt Abscheide- und 350 Volt Abrissspannung (Badtemperatur 29°C) auf kathodisch geschalteten zinkphosphatierten Stahlprüftafeln ohne Cr(V))-Nachspülung in der Vorbehandlung.

**Tab.3: pH-Werte, Leitwerte und Schichtdicken der erfindungsgemäßen KT-Lacke**

| | Tauchbad 1 Vergleich | Tauchbad 2 | Tauchbad 3 | Tauchbad 4 |
|---|---|---|---|---|
| pH-Wert | 5,74 | 5,68 | 5,76 | 5,82 |
| Leitwert (mS/cm) | 1,81 | 1,79 | 1,90 | 1,83 |
| Schichtdicke (µm) | 20 | 20 | 21 | 22 |

Die abgeschiedenen Filme werden mit entionisiertem Wasser nachgespült und während 15 Minuten bei 175°C (Objekttemperatur) eingebrannt (außerdem bei 160°C für die Bestimmung der Glasübergangstemperatur Tg als Maß für die Vernetzung).

**Tab.4: Glasübergangstemperaturen Tg der erfindungsgemäßen KT-Lacke (bestimmt mit Hilfe der DSC*)**

| | Tauchlack 1 Vergleich | Tauchlack 2 | Tauchlack 3 | Tauchlack 4 |
|---|---|---|---|---|
| Tg (160°C) | 62 | 53 | 59 | 64 |
| Tg (175°C | 88 | 80 | 86 | 91 |

| | | | | |
|---|---|---|---|---|
| * Nach DIN 53765 (03.1994) - Abschnitt 7.1 Glasübergang: Prüfung von Kunststoffen und Elastomeren - Thermische Analyse - Dynamische Differenzkalorimetrie (DDK) | | | | |

Die Resistenz des Bades gegen Phosphatzusatz wird mit Hilfe der beschriebenen Prüfung untersucht.

### Beispiel 7

### Prüfung einer kathodischen Tauchlackierung auf Kraterempfindlichkeit gegen Zinnphosphatkrater

Wie beschrieben, kann es, zum Beispiel aufgrund von Phosphatverschleppung aus der Vorbehandlung, im KTL-Tauchbecken zu erhöhten Phosphatgehalten kommen und hierdurch zur Bildung von Zinnphosphatsalzen. Diese können als Niederschlag zur Bildung von leichten Dellen bis hin zu deutlichen Kratern führen. Die Empfindlichkeit einer kathodischen Tauchlackierung gegenüber Phosphatzusätzen wird durch Zusatz von Natriumhydrogenphosphat und Ansäuern des Tauchbades überprüft (bestimmt nach DIN 53765 siehe "*" weiter oben).

Durchführung: Zur Prüfung des Vergleichs (siehe oben) und der erfindungsgemäßen Tauchbäder werden L-förmige Testbleche (10 x 20 cm mittig geknickt) beschichtet, danach noch weitere 15 Minuten im Bad belassen und der waagrecht beschichtete Teil der Oberfläche beurteilt. Nach Erstellung der Nullproben werden die Bäder mit 100 ppm Di-Natrium-Hydrogenphosphat-Dodekahydrat versetzt (1,88 g des Salzes in 50 ml vollentsalztem Wasser für 5 kg Badmaterial) und 24 für Stunden gerührt. Nach Einstellen des pH-Wertes auf 5,5 mit 85 % Ameisensäure wird erneut 24 Stunden gerührt und abgeschieden.

**Tab. 5: Ergebnisse der Kraterempfindlichkeit**

| | Tauchbad 1 | Tauchbad 2 | Tauchbad 3 | Tauchbad 4 |
|---|---|---|---|---|
| L-Blech | keine Krater | keine Krater | keine Krater | keine Krater |
| L-Blech + 15' im Bad | keine Krater | keine Krater | keine Krater | keine Krater |
| + 100 ppm PO₄³⁻ und Ameisensäure bis pH 5,5 | | | | |
| L-Blech | > 100 Krater | keine Krater | keine Krater | keine Krater |
| L-Blech + 15' im Bad | > 1000 Krater | < 10 Krater | < 10 Krater | < 10 Krater |

## Patentansprüche

1. Kathodisch abscheidbare Elektrotauchlackzusammensetzung enthaltend eine wässrige Bindemitteldispersion, einen Vernetzer und Kern/Schale-Partikel KS, **dadurch gekennzeichnet, dass** die Kern/Schale-Partikel aus einem Kern K und einem die Schale S bildenden Katalysator bestehen und dass der Kern ein anorganischer und katalytisch inerter Träger ist und der Katalysator als diskrete Teilchen aneinander angrenzend oder beabstandet auf der Oberfläche des Kerns K angeordnet ist und wobei die Kern/Schate-Partikel einen maximalen Durchmesser von 1000 nm besitzen und die Dicke der Schale S maximal 50 nm misst und die Kern/Schate-Partikel dadurch herstellbar sind, dass von einer Suspoemulsion einer ersten, dispersen flüssigen Phase I, in einer zweiten, kontinuierlichen flüssigen Phase II ausgegangen wird, die in der ersten, dispersen flüssigen Phase I submikrone Partikel eines den Kern bildenden Feststoffes K sowie eine molekular dispers gelöste Vorläufersubstanz VS für die Schale und gegebenenfalls einen Reaktanden R enthält, und dass in der ersten, dispersen flüssigen Phase I der Suspoemulsion die submikronen Kern/Schale-Partikel KS durch chemische oder physikalische Umwandlung der Vorläufersubstanz VS für die Schale hergestellt werden.

2. Kathodisch abscheidbare Elektrotauchlackzusammensetzung nach Anspruch 1, **dadurch gekennzeichnet, dass** die Suspoemulsion der ersten, dispersen flüssigen Phase I in der zweiten, kontinuierlichen flüssigen Phase II, enthaltend in der ersten, dispersen flüssigen Phase I die submikronen Partikel des den Kern bildenden Feststoffes K sowie die molekular dispers gelöste Vorläufersubstanz VS für die Schale hergestellt wird, indem von einer Suspension der submikronen Partikel des den Kern bildenden Feststoffes K in der ersten flüssigen Phase I ausgegangen wird, hierzu die Vorläufersubstanz VS für die Schale zugegeben und molekular dispers gelöst und anschließend die zweite flüssige Phase II zugegeben und unter Zuführung von Energie mit der ersten flüssigen Phase I emulgiert wird.

3. Kathodisch abscheidbare Elektrotauchlackzusammensetzung nach einem der Ansprüche 1-2, **dadurch gekennzeichnet, dass** die Suspoemulsion der ersten, dispersen flüssigen Phase I in der zweiten, kontinuierlichen flüssigen Phase II, enthaltend in der ersten, dispersen flüssigen Phase I die submikronen Partikel des den Kern bildenden Feststoffes K sowie die molekular dispers gelöste Vorläufersubstanz VS für die Schale hergestellt wird, indem von einer Suspoemulsion von submikronen Partikeln eines den Kern bildenden Feststoffes K in der ersten flüssigen Phase I als disperser Phase, in der zweiten flüssigen Phase II als kontinuierlicher Phase ausgegangen wird, die Vorläufersubstanz VS für die Schale in einer dritten flüssigen Phase III eingebracht wird, die mit der ersten flüssigen Phase I mischbar ist, jedoch mit der zweiten flüssigen Phase II nicht mischbar ist, und aus der dritten flüssigen Phase III, enthaltend die Vorläufersubstanz VS, mit einer vierten flüssigen Phase IV, die mit der zweiten flüssigen Phase II mischbar ist, nicht jedoch mit der ersten und der dritten flüssigen Phase III, unter Energieeintrag eine Emulsion gebildet wird, und die Tropfen der ersten flüssigen. Phase I und die Tropfen der dritten flüssigen Phase III durch Energieeintrag zur Koaleszenz gebracht werden.

4. Kathodisch abscheidbare Elektrotauchlackzusammensetzung nach einem der Ansprüche 1-3, **dadurch gekennzeichnet, dass** die Suspoemulsion der ersten, dispersen flüssigen Phase I in der zweiten, kontinuierlichen flüssigen Phase II, enthaltend in der ersten, dispersen flüssigen Phase I die submikronen Partikel des den Kern bildenden Feststoffes K, die molekular dispers gelöste Vorläufersubstanz VS für die Schale sowie den Reaktanden R, hergestellt wird, in dem von einer Suspoemulsion von submikronen Partikeln eines den Kern bildenden Feststoffes K sowie einer molekular dispers gelösten Vorläufersubstanz VS für die Schale in der ersten flüssigen Phase I als disperser Phase, in der zweiten flüssigen Phase II als kontinuierlicher Phase ausgegangen wird, wonach ein Reaktand R entweder in der zweiten, kontinuierlichen flüssigen Phase II zugegeben wird und in die Tropfen der ersten, dispersen flüssigen Phase I eindiffundiert oder in einer weiteren flüssigen Phase V zugegeben wird, die mit der ersten, dispersen flüssigen Phase I mischbar ist, jedoch nicht mit der zweiten, kontinuierlichen flüssigen Phase II aus der weiteren flüssigen Phase V, enthaltend den Reaktanden R mit einer zusätzlichen flüssigen Phase VI, unter Energieeintrag eine Emulsion gebildet wird und die Tropfen derselben mit den Tropfen der ersten, dispersen flüssigen Phase I, enthaltend den den Kern bildenden Feststoff K sowie die Vorläufersubstanz VS für die Schale, zur erzwungenen Koaleszenz gebracht wird.

5. Kathodisch abscheidbare Elektrotauchlackzusammensetzung nach einem der Ansprüche 1-4, **dadurch gekennzeichnet, dass** die Suspoemulsion der ersten, dispersen flüssigen Phase I in der zweiten, kontinuierlichen flüssigen Phase 11, enthaltend in der ersten, dispersen flüssigen Phase I die submikronen Partikel des den Kern bildenden Feststoffes K, die molekular dispers gelöste Vorläufersubstanz VS für die Schale sowie den Reaktanden R, hergestellt wird, indem von einer Suspoemulsion einer ersten, dispersen flüssigen Phase I, in einer zweiten, kontinuierlichen flüssigen Phase II ausgegangen wird, die in der ersten, dispersen flüssigen Phase I submikrone Partikel eines Feststoffes K enthält, ein Reaktand R in einer dritten flüssigen Phase III eingebracht wird, die mit der ersten flüssigen Phase I mischbar ist, jedoch mit der zweiten flüssigen Phase II nicht mischbar ist, und aus der dritten flüssigen Phase III, enthaltend den Reaktanden R mit einer vierten flüssigen Phase IV unter Energieeintrag eine Emulsion gebildet wird und die Tropfen der ersten flüssigen Phase I und die Tropfen der dritten flüssigen Phase III unter Energieeintrag zur Koaleszenz gebracht werden, wonach die Vorläufersubstanz VS für die Schale entweder der zweiten, kontinuierlichen flüssigen Phase II zugesetzt wird und in die Tropfen der ersten, dispersen flüssigen Phase I eindiffundiert oder in Form einer weiteren Emulsion zugesetzt wird, enthaltend die Vorläufersubstanz VS für die Schale in den Tropfen der dispersen Phase derselben, wobei die disperse Phase der weiteren Emulsion mit der ersten, dispersen flüssigen Phase I mischbar, nicht jedoch mit der kontinuierlichen flüssigen Phase II mischbar ist, und die kontinuierliche Phase der weiteren Emulsion mit der ersten, kontinuierlichen Phase II mischbar ist, und wonach die Tropfen der ersten, dispersen flüssigen Phase I und die Tropfen der flüssigen Phase der weiteren Emulsion zur erzwungenen Koaleszenz gebracht werden.

6. Kathodisch abscheidbare Elektrotauchlackzusammensetzung nach einem der Ansprüche 1-5, **dadurch gekennzeichnet, dass** die Suspoemulsion enthaltend die submikronen Partikel des den Kern bildenden Feststoffes K in der ersten, dispersen flüssigen Phase I, mit der zweiten flüssigen Phase II als kontinuierlicher Phase hergestellt wird, indem von einer Miniemulsion ausgegangen wird, enthaltend eine Vorläufersubstanz VK für den den Kern bildenden Feststoff der ersten, dispersen flüssigen Phase I, wobei die zweite flüssige Phase II die kontinuierliche Phase ist, und woraus durch physikalische oder chemische Umwandlung der den Kern bildenden Vorläufersubstanz VK die Minisuspoemulsion des den Kern bildenden Feststoffes K in der ersten, dispersen flüssigen Phase I, mit der zweiten flüssigen Phase II als kontinuierlicher Phase, gebildet wird.

7. Kathodisch abscheidbare Elektrotauchlackzusammensetzung nach einem der Ansprüche 1-6, **gekennzeichnet dadurch, dass** es sich bei den Kern/Schale-Partikeln um im Wesentlichen sphärische Teilchen handelt.

8. Kathodisch abscheidbare Elektrotauchlackzusammensetzung nach einem der Ansprüche 1-7, **gekennzeichnet dadurch, dass** der Kern K der Kern/Schale-Partikel eine Nadeiform, eine Kegelform oder eine Polyeder-Form ausgewählt aus der Gruppe bestehend aus Tetraeder, Oktaeder, pentagonaler Bipyramide und Ikosaeder besitzt.

9. Kathodisch abscheidbare Elektrotauchlackzusammensetzung nach einem der Ansprüche 1-8, **gekennzeichnet dadurch, dass** der Kern ausgewählt wird aus der Gruppe bestehend aus SiO₂, TiO₂, ZrO₂, Fe₂O₃, Fe₃O₄, Al₂O₃ und MFeₓO_{y}, Schichtsilikaten, Halbleitern ausgewählt aus der Gruppe bestehend aus Sulfiden, Seleniden, Nitriden, Arseniden, Phosphiden und Antimoniden oder Mischungen der oben genannten Materialien, wobei M ein Übergangsmetall oder ein Hauptgruppenelement ist und x und y unabhängig voneinander ausgewählt werden und eine ganze Zahl von 1 bis 4 bedeuten.

10. Kathodisch abscheidbare Elektrotauchlackzusammensetzung nach einem der Ansprüche 1-9, **gekennzeichnet dadurch, dass** die Schale ausgewählt wird aus der Gruppe bestehend aus ZnO, Ca₂O₃, CeO₂, CuO, Cu₂O, SnO, SoO₂, Bi₂O₃, WO₃, Y₂O₃, La₂O₃, MnO₂, MoO₂, Nd₂O₃, NdO₂, VO₂, VO₃, V₂O₅.

11. Kathodisch abscheidbare Elektrotauchlackzusammensetzung nach einem der Ansprüche 1-10, **gekennzeichnet dadurch, dass** der Metallgehalt des Katalysators der Kern/Schale-Partikel in der Elektrotauchlackzusammensetzung zwischen 2,5 - 10 mmol Metall bezogen auf 100 g Bindemittelfestkörper liegt.

12. Verwendung der kathodisch abscheidbaren Elektrotauchlackzusammensetzung nach einem der vorherigen Ansprüche zur Lackierung von leitfähigen Werkstücken.

13. Verwendung der kathodisch abscheidbaren Elektrotauchlackzusammensetzung nach Anspruch 12, **gekennzeichnet dadurch, dass** die Werkstücke Automobilkarossen oder Teile davon sind.

## Claims

1. Cathodically depositable electrodeposition primer composition comprising an aqueous binder dispersion, a crosslinker, and core/shell particles CS, **characterized in that** the core/shell particles are composed of a core C and a shell S-forming catalyst and **in that** the core is an inorganic and catalytically inert support and the catalyst is disposed in the form of discrete particles bordering one another or spaced apart on the surface of the core C and the core/shell particles possess a maximum diameter of 1000 nm, and the thickness of the shell S measures not more than 50 nm, and wherein the core/shell particles are preparable by starting from a suspoemulsion of a first, disperse liquid phase I in a second, continuous liquid phase II, which in the first, disperse liquid phase I comprises submicron particles of a core-forming solid C and also a molecularly dispersely dissolved precursor substance PS for the shell and, optionally, a reactant R, and wherein, in the first, disperse liquid phase I of the suspoemulsion, the submicron core/shell particles CS are produced by chemical or physical conversion of the precursor substance PS for the shell.

2. Cathodically depositable electrodeposition primer composition according to Claim 1, **characterized in that** the suspoemulsion of the first, disperse liquid phase I in the second, continuous liquid phase II, comprising in the first, disperse liquid phase I the submicron particles of the core-forming solid C and also the molecularly dispersely dissolved precursor substance PS for the shell, is prepared by starting from a suspension of the submicron particles of the core-forming solid C in the first liquid phase I, adding thereto the precursor substance PS for the shell and subjecting it to molecularly disperse dissolution, and subsequently adding the second liquid phase II and emulsifying it, with supply of energy, with the first liquid phase I.

3. Cathodically depositable electrodeposition primer composition according to either of Claims 1-2, **characterized in that** the suspoemulsion of the first, disperse liquid phase I in the second, continuous liquid phase II, comprising in the first, disperse liquid phase I the submicron particles of the core-forming solid C and also the molecularly dispersely dissolved precursor substance PS for the shell, is prepared by starting from a suspoemulsion of submicron particles of a core-forming solid C in the first liquid phase I as disperse phase, in the second liquid phase II as continuous phase, introducing the precursor substance PS for the shell in a third liquid phase III, which is miscible with the first liquid phase I but not miscible with the second liquid phase II, and forming an emulsion from the third liquid phase III, comprising the precursor substance PS, with a fourth liquid phase IV, which is miscible with the second liquid phase II but not with the first and the third liquid phase III, with input of energy, and, through input of energy, causing the coalescence of the droplets of the first liquid phase I and the droplets of the third liquid phase III.

4. Cathodically depositable electrodeposition primer composition according to any one of Claims 1-3, **characterized in that** the suspoemulsion of the first, disperse liquid phase I in the second, continuous liquid phase II, comprising in the first, disperse liquid phase I the submicron particles of the core-forming solid C, the molecularly dispersely dissolved precursor substance PS for the shell, and the reactant R, is prepared by starting from a suspoemulsion of submicron particles of a core-forming solid C and also from a molecularly dispersely dissolved precursor substance PS for the shell in the first liquid phase I as disperse phase, in the second liquid phase II as continuous phase, after which a reactant R either is added in the second, continuous liquid phase II and diffuses into the droplets of the first, disperse liquid phase I, or is added in a further liquid phase V, which is miscible with the first, disperse liquid phase I but not with the second, continuous liquid phase II, and an emulsion is formed from the further liquid phase V, comprising the reactant R, with an additional liquid phase VI, with input of energy, and the droplets of said emulsion are brought to forced coalescence with the droplets of the first, disperse liquid phase I comprising the core-forming solid C and also the precursor substance PS for the shell.

5. Cathodically depositable electrodeposition primer composition according to any one of Claims 1-4, **characterized in that** the suspoemulsion of the first, disperse liquid phase I in the second, continuous liquid phase II, comprising in the first, disperse liquid phase I the submicron particles of the core-forming solid C, the molecularly dispersely dissolved precursor substance PS for the shell, and the reactant R, is prepared by starting from a suspoemulsion of a first, disperse liquid phase I in a second, continuous liquid phase II, which in the first, disperse liquid phase I comprises submicron particles of a solid C, introducing a reactant R in a third liquid phase III, which is miscible with the first liquid phase I but not miscible with the second liquid phase II, and forming an emulsion from the third liquid phase III, comprising the reactant R, with a fourth liquid phase IV, with input of energy, and causing the coalescence of the droplets of the first liquid phase I and the droplets of the third liquid phase III, with input of energy, after which the precursor substance PS for the shell either is added to the second, continuous liquid phase II and diffuses into the droplets of the first, disperse liquid phase I or is added in the form of a further emulsion comprising the precursor substance PS for the shell in the droplets of the disperse phase thereof, the disperse phase of the further emulsion being miscible with the first, disperse liquid phase I but not with the continuous liquid phase II, and the continuous phase of the further emulsion being miscible with the first, continuous phase II, and after which the droplets of the first, disperse liquid phase I and the droplets of the liquid phase of the further emulsion are brought to forced coalescence.

6. Cathodically depositable electrodeposition primer composition according to any one of Claims 1-5, **characterized in that** the suspoemulsion comprising the submicron particles of the core-forming solid C in the first, disperse liquid phase I with the second liquid phase II as continuous phase is prepared by starting from a miniemulsion comprising a precursor substance PC for the core-forming solid of the first, disperse liquid phase I, the second liquid phase II being the continuous phase, and forming therefrom, by physical or chemical conversion of the core-forming precursor substance PC, the minisuspoemulsion of the core-forming solid C in the first, disperse liquid phase I with the second liquid phase II as continuous phase.

7. Cathodically depositable electrodeposition primer composition according to any one of Claims 1-6, **characterized in that** the core/shell particles are substantially spherical particles.

8. Cathodically depositable electrodeposition primer composition according to any one of Claims 1-7, **characterized in that** the core C of the core/shell particles possesses a needle shape, a cone shape or a polyhedron shape selected from the group consisting of tetrahedron, octahedron, pentagonal bipyramid, and icosahedron.

9. Cathodically depositable electrodeposition primer composition according to any one of Claims 1-8, **characterized in that** the core is selected from the group consisting of SiO₂, TiO₂, ZrO₂, Fe₂O₃, Fe₃O₄, Al₂O₃ and MFeₓO_{y}, phyllosilicates, semiconductors selected from the group consisting of sulfides, selenides, nitrides, arsenides, phosphides and antimonides or mixtures of the abovementioned materials, M being a transition metal or a main group element, and x and y being selected independently of one another and denoting an integer from 1 to 4.

10. Cathodically depositable electrodeposition primer composition according to any one of Claims 1-9, **characterized in that** the shell is selected from the group consisting of ZnO, Ce₂O₃, CeO₂, CuO, Cu₂O, SnO, SnO₂ , Bi₂O₃, WO₃, Y₂O₃, La₂O₃, MnO₂, MoO₂, Nd₂O₃, NdO₂, VO₂, VO₃, and V₂O₅.

11. Cathodically depositable electrodeposition primer composition according to any one of Claims 1-10, **characterized in that** the metal content of the catalyst of the core/shell particles in the electrodeposition primer composition is between 2.5 - 10 mmol of metal relative to 100 g of binder solids.

12. Use of the cathodically depositable electrodeposition primer composition according to any one of the preceding claims for coating conductive workpieces.

13. Use of the cathodically depositable electrodeposition primer composition according to Claim 12, **characterized in that** the workpieces are automobile bodies or parts thereof.

## Revendications

1. Composition de peinture par électrophorèse à immersion déposable cathodiquement, contenant une dispersion aqueuse de liant, un agent de réticulation et des particules noyau/enveloppe KS, **caractérisée en ce que** les particules noyau/enveloppe sont constituées d'un noyau K et d'un catalyseur formant l'enveloppe S, et **en ce que** le noyau est un support inorganique et catalytiquement inerte, et le catalyseur est agencé sur la surface du noyau K sous la forme de particules discrète adjacentes les unes aux autres ou espacées les unes des autres, les particules noyau/enveloppe présentant un diamètre maximal de 1 000 nm et l'épaisseur de l'enveloppe S étant d'au plus 50 nm et les particules noyau/enveloppe pouvant être fabriquées en partant d'une suspo-émulsion d'une première phase liquide dispersée I dans une deuxième phase liquide continue II, qui contient dans la première phase liquide dispersée I des particules submicroniques d'un solide K formant le noyau, ainsi qu'une substance précurseur VS pour l'enveloppe dissoute avec dispersion moléculaire et éventuellement un réactif R, et en fabriquant dans la première phase liquide dispersée I de la suspo-émulsion les particules noyau/enveloppe submicroniques KS par transformation chimique ou physique de la substance précurseur VS pour l'enveloppe.

2. Composition de peinture par électrophorèse à immersion déposable cathodiquement selon la revendication 1, **caractérisée en ce que** la suspo-émulsion de la première phase liquide dispersée I dans la deuxième phase liquide continue II, contenant dans la première phase liquide dispersée I les particules submicroniques du solide K formant le noyau, ainsi que la substance précurseur VS pour l'enveloppe dissoute avec dispersion moléculaire, est fabriquée en partant d'une suspension des particules submicroniques du solide K formant le noyau dans la première phase liquide I, en ajoutant à celle-ci la substance précurseur VS pour l'enveloppe et en la dissolvant avec dispersion moléculaire, et en ajoutant ensuite la deuxième phase liquide II et en l'émulsifiant avec la première phase liquide I par apport d'énergie.

3. Composition de peinture par électrophorèse à immersion déposable cathodiquement selon l'une quelconque des revendications 1 à 2, **caractérisée en ce que** la suspo-émulsion de la première phase liquide dispersée I dans la deuxième phase liquide continue II, contenant dans la première phase liquide dispersée I les particules submicroniques du solide K formant le noyau, ainsi que la substance précurseur VS pour l'enveloppe dissoute avec dispersion moléculaire, est fabriquée en partant d'une suspo-émulsion de particules submicroniques d'un solide K formant le noyau dans la première phase liquide I en tant que phase dispersée, dans la deuxième phase liquide II en tant que phase continue, en introduisant la substance précurseur VS pour l'enveloppe dans une troisième phase liquide III qui est miscible avec la première phase liquide I, mais qui n'est toutefois pas miscible avec la deuxième phase liquide II, et en formant d'une émulsion par apport d'énergie à partir de la troisième phase liquide III, contenant la substance précurseur VS, avec une quatrième phase liquide IV, qui est miscible avec la deuxième phase liquide II, mais qui n'est toutefois pas miscible avec la première et la troisième phase liquide III, et en mettant en coalescence les gouttes de la première phase liquide I et les gouttes de la troisième phase liquide III par apport d'énergie.

4. Composition de peinture par électrophorèse à immersion déposable cathodiquement selon l'une quelconque des revendications 1 à 3, **caractérisée en ce que** la suspo-émulsion de la première phase liquide dispersée I dans la deuxième phase liquide continue II, contenant dans la première phase liquide dispersée I les particules submicroniques du solide K formant le noyau, la substance précurseur VS pour l'enveloppe dissoute avec dispersion moléculaire, ainsi que le réactif R, est fabriquée en partant d'une suspo-émulsion de particules submicroniques d'un solide K formant le noyau, ainsi que d'une substance précurseur VS pour l'enveloppe dissoute avec dispersion moléculaire dans la première phase liquide I en tant que phase dispersée, dans la deuxième phase liquide II en tant que phase continue, soit en introduisant ensuite un réactif R dans la deuxième phase liquide continue II et en le diffusant dans les gouttes de la première phase liquide dispersée I, soit en l'introduisant dans une phase liquide supplémentaire V, qui est miscible avec la première phase liquide dispersée I, mais qui n'est toutefois pas miscible avec la deuxième phase liquide continue II, et en formant une émulsion à partir de la phase liquide V supplémentaire, contenant le réactif R, avec une phase liquide supplémentaire VI, par apport d'énergie, et en mettant en coalescence forcée les gouttes de celle-ci avec les gouttes de la première phase liquide dispersée I, contenant le solide K formant le noyau et la substance précurseur VS pour l'enveloppe.

5. Composition de peinture par électrophorèse à immersion déposable cathodiquement selon l'une quelconque des revendications 1 à 4, **caractérisée en ce que** la suspo-émulsion de la première phase liquide dispersée I dans la deuxième phase liquide continue II, contenant dans la première phase liquide dispersée I les particules submicroniques du solide K formant le noyau, la substance précurseur VS pour l'enveloppe dissoute avec dispersion moléculaire, ainsi que le réactif R, est fabriquée en partant d'une suspo-émulsion d'une première phase liquide dispersée I dans une deuxième phase liquide continue II, qui contient dans la première phase liquide dispersée I des particules submicronique d'un solide K, en introduisant un réactif R dans une troisième phase liquide III qui est miscible avec la première phase liquide I, mais qui n'est toutefois pas miscible avec la deuxième phase liquide II, et en formant une émulsion par apport d'énergie à partir de la troisième phase liquide III, contenant le réactif R, avec une quatrième phase liquide IV, et en mettant en coalescence les gouttes de la première phase liquide I et les gouttes de la troisième phase liquide III, puis soit en ajoutant la substance précurseur VS pour l'enveloppe à la deuxième phase liquide continue II et en la diffusant dans les gouttes de la première phase liquide dispersée I, soit en l'ajoutant sous la forme d'une émulsion supplémentaire, contenant la substance précurseur VS pour l'enveloppe dans les gouttes de sa phase dispersée, la phase dispersée de l'émulsion supplémentaire étant miscible avec la première phase liquide dispersée I, mais n'étant toutefois pas miscible avec la phase liquide continue II, et la phase continue de l'émulsion supplémentaire étant miscible avec la première phase continue II, puis en mettant en coalescence forcée les gouttes de la première phase liquide dispersée I et les gouttes de la phase liquide de l'émulsion supplémentaire.

6. Composition de peinture par électrophorèse à immersion déposable cathodiquement selon l'une quelconque des revendications 1 à 5, **caractérisée en ce que** la suspo-émulsion contenant les particules submicroniques du solide K formant le noyau dans la première phase liquide dispersée I avec la deuxième phase liquide II en tant que phase continue est fabriquée en partant d'une mini-émulsion, contenant une substance précurseur VK pour le solide formant le noyau, de la première phase liquide dispersée I, la deuxième phase liquide II étant la phase continue, et en formant à partir de celle-ci, par transformation physique ou chimique de la substance précurseur VK formant le noyau, la mini-suspo-émulsion du solide K formant le noyau dans la première phase liquide dispersée I, avec la deuxième phase liquide II en tant que phase continue.

7. Composition de peinture par électrophorèse à immersion déposable cathodiquement selon l'une quelconque des revendications 1 à 6, **caractérisée en ce que** les particules noyau/enveloppe sont des particules essentiellement sphériques.

8. Composition de peinture par électrophorèse à immersion déposable cathodiquement selon l'une quelconque des revendications 1 à 7, **caractérisée en ce que** le noyau K des particules noyau/enveloppe présente une forme aciculaire, une forme conique ou une forme polyédrique choisie dans le groupe constitué par les tétraèdres, les octaèdres, les bipyramides pentagonales et les icosaèdres.

9. Composition de peinture par électrophorèse à immersion déposable cathodiquement selon l'une quelconque des revendications 1 à 8, **caractérisée en ce que** le noyau est choisi dans le groupe constitué par SiO₂, TiO₂, ZrO₂, Fe₂O₃, Fe₃O₄, Al₂O₃ et MFeₓO_{y}, les silicates en feuillets, les semi-conducteurs choisis dans le groupe constitué par les sulfures, les séléniures, les nitrures, les arséniures, les phosphures et les antimoniures, ou les mélanges des matériaux susmentionnés, M étant un métal de transition ou un élément des groupes principaux, et x et y étant choisis indépendamment l'un de l'autre et signifiant un nombre entier de 1 à 4.

10. Composition de peinture par électrophorèse à immersion déposable cathodiquement selon l'une quelconque des revendications 1 à 9, **caractérisée en ce que** l'enveloppe est choisie dans le groupe constitué par ZnO, Ce₂O₃, CeO₂, CuO, Cu₂O, SnO, SnO₂, Bi₂O₃, WO₃, Y₂O3 , La₂O₃, MnO₂, MoO₂, Nd₂O₃, NdO₂, VO₂, VO₃, V₂O₅.

11. Composition de peinture par électrophorèse à immersion déposable cathodiquement selon l'une quelconque des revendications 1 à 10, **caractérisée en ce que** la teneur en métal du catalyseur des particules noyau/enveloppe dans la composition de peinture par électrophorèse à immersion est comprise entre 2,5 et 10 mmol de métal par rapport à 100 g de solide liant.

12. Utilisation de la composition de peinture par électrophorèse à immersion déposable cathodiquement selon l'une quelconque des revendications précédentes pour la peinture de pièces conductrices.

13. Utilisation de la composition de peinture par électrophorèse à immersion déposable cathodiquement selon la revendication 12, **caractérisée en ce que** les pièces sont des carrosseries automobiles ou des parties de celles-ci.
